# EUROPÄISCHE PATENTSCHRIFT

(11) **EP 2 163 409 B1**
(45) Veröffentlichungstag und Bekanntmachung des Hinweises auf die Patenterteilung: **03.08.2011**
(21) Anmeldenummer: 09450155.8
(22) Anmeldetag: 02.09.2009
(51) Int. Cl.: B60C 27/08, B60C 27/00

(54) **Gleitschutzkette mit Felgenschutzabdeckungen**
Rail protection chain with rim protection covers
Chaîne antidérapante dotée de recouvrements de protection pour jantes

(30) Priorität: 16.09.2008 AT 14452008
(43) Veröffentlichungstag der Anmeldung: 17.03.2010
(73) Patentinhaber: Pewag Schneeketten GmbH & Co KG, 9371 Brückl (AT)
(72) Erfinder: Pengg, Ägyd, 9020 Klagenfurt (AT); Nieß, Bernhard, 8312 Ottendorf (AT)
(74) Vertreter: Patentanwaltskanzlei Matschnig & Forsthuber OG

(56) Entgegenhaltungen:
- EP-A- 0 976 588
- DE-A1- 4 225 802
- US-A- 5 280 816

## Beschreibung

Die gegenständliche Erfindung betrifft eine Gleitschutzkette mit einem Laufnetz mit Spurkreuzen und einem in einem montierten Zustand an einer Reifenseite (vorzugsweise die Reifenaußenseite) anliegenden Seitenstrang, wobei die Spurkreuze über Haken mit dem Seitenstrang verbunden sind, wobei je Haken eine den Haken umfassende Felgenschutzabdeckung vorgesehen ist.

Aus der AT 500295 B1 ist eine Gleitschutzkette zum Aufziehen auf einen Fahrzeugreifen auf einer Felge bekannt geworden, bei welcher an Teilen der Kette, die mit der Felge in Berührung kommen können, ein Felgenschutzelement, welches eine Halterung für einen an der Reifenaußenseite anliegenden Spannstrang bildet, vorgesehen ist. Die bekannten Felgenschutzelemente weisen Halterungen auf, durch welche der Spannstrang zu Zwecken des Spannens durchgezogen werden kann. Nachteilig an der bekannten Ausführungsform ist vor allem, dass bei einer Gleitschutzkette, bei welcher der Spannstrang an der Reifeninnenseite angeordnet ist und an der Reifenaußenseite lediglich ein Seitenstrang vorgesehen ist, keine gute Anbindung des Spurkreuzes an den Seitenstrang gewährleistet ist.

Zur Anbindung des Spurkreuzes an Spannstränge schlägt die US 2,685,321 Aufhängeklemmen vor, die entlang des Spannstrangs verschiebbar sind.

Die EP 1 520 734 A2 offenbart eine Spannvorrichtung für Schneeketten, bei der das Spurkreuz über Haken in den Seitenstrang eingehängt ist. Ein Kopfteil dieser Spannvorrichtung umgibt jenes Kettenglied des Seitenstrangs, in das ein solcher Haken eingehängt ist, lässt jedoch den Haken selbst frei, sodass dieser nach wie vor mit der Felge in Berührung kommen kann.

In der gattungsbildenden EP 0 976 588 A1 ist eine Felgenschutzvorrichtung beschrieben, die den Haken gänzlich umgibt, samt den zugehörenden Endgliedern der Spurkreuzketten. Dies führt beim Betrieb der Gleitschutzkette zu zusätzlichen Belastungen am Spurkreuz sowie an der Felgenschutzabdeckung selbst, und Ausgleichsbewegungen des Spurkreuzes führen zu Bewegungen der Vorrichtung gegenüber der Reifenseite.

Es ist daher eine Aufgabe der Erfindung den oben genannten Nachteil des Stands der Technik zu überwinden.

Diese Aufgabe wird mit einer Gleitschutzkette der eingangs genannten Art erfindungsgemäß dadurch gelöst, dass die Spurkreuze über die in je zumindest ein Kettenglied des Seitenstranges eingehängte Haken mit dem Seitenstrang verbunden sind, wobei die Felgenschutzabdeckungen jeweils das zumindest eine Kettenglied des Seitenstrangs umfassen und ein der Anbindung der Spurkreuze dienender Teil des Hakens aus der Felgenschutzabdeckung hinausragt.

Es ist ein Verdienst der Erfindung, dass sich sowohl eine gute Anbindung des Seitenstranges an das Spurkreuz als auch ein sehr effizienter Felgenschutz gewährleisten lassen.

Eine nachträgliche Montage auf der Gleitschutzkette wird dadurch wesentlich erleichtert, dass die Felgenschutzabdeckung einen der Reifenaußenseite abgewandten Vorderteil und einen der Reifenaußenseite zugewandten Hinterteil aufweist, wobei Vorder- und Hinterteil Ausnehmungen zur Aufnahme des zumindest einen Kettengliedes und des Hakens aufweisen.

Die Montage lässt sich dadurch noch weiter vereinfachen, dass der Vorderteil und der Hinterteil der Felgenschutzabdeckung mittels einer Schnappverbindung auf dem Haken und dem zumindest einen Kettenglied fixierbar sind, wobei zumindest eine der beiden Seiten der Felgenschutzabdeckung zumindest einen Fortsatz und die andere Seite zumindest eine mit dem Fortsatz korrespondierende Öffnung aufweist, in welche der Fortsatz einschnappbar ist.

Die Handhabung der Felgenschutzabdeckung wird dadurch wesentlich erleichtert, dass der Vorder- und der Hinterteil der Felgenschutzabdeckung mittels eines scharnierartigen Gelenks verbunden sind.

Günstigerweise umhüllt die Felgenschutzabdeckung den Haken, das Kettenglied des Seitenstranges, in welches der Haken eingehängt ist, sowie Abschnitte der diesem Kettenglied links und rechts benachbarten Kettenglieder in einem montierten Zustand im Wesentlichen.

Ein Zerkratzen der Felge lässt sich besonders gut dadurch verhindern, dass die Felgenschutzabdeckung aus Kunststoff gefertigt ist.

Um die Anbindung des Spurkreuzes an einen Spannstrang (der normalerweise an der gegenüber liegenden Reifenseite zu liegen kommt, häufig auf der Reifeninnenseite als Innenspannstrang) zu ermöglichen, weist die Ummantelung des Spannstranges üblicherweise Unterbrechungen auf, sodass der Spannstrang an diesen Stellen einen geringeren Querschnitt aufweist. An den Unterbrechungen der Ummantelung werden sodann Haken befestigt, welche den Spannstrang mit dem Spurkreuz verbinden. Diese Methode nach dem Stand der Technik hat jedoch den Nachteil, dass sie sehr aufwendig ist und somit hohe Herstellungskosten bedingt. Weiters können sich die Haken um den Spannstrang als Achse verdrehen, auch wenn ein seitliches Verrutschen durch die Ummantelung weitgehend verhindert wird. Durch die Verdrehbarkeit der Haken um den Spannstrang wird jedoch die Montage erschwert. Diese Nachteile lassen sich dadurch überwinden, dass die Gleitschutzkette einen (Innen)Spannstrang aufweist, auf welchem Verbindungselemente verrutschungssicher, aufgeklemmt sind, in welche je ein den Innenseitenstrang mit zumindest einem Spurkreuz verbindender Haken oder Kettenstränge des Laufnetzes direkt eingehängt ist/sind. Dadurch wird eine besonders zuverlässige Funktion sowie eine einfache Handhabung gewährleistet.

Die Handhabung und der Bedienungskomfort lassen sich noch dadurch weiter verbessern, dass zumindest eine der Felgenschutzabdeckungen besonders gekennzeichnet ist, beispielsweise durch eine besondere Farbgebung. Die Kennzeichnung ist vor allem für die Montage und Demontage der Kette sehr hilfreich, da für den Benutzer die Relativlage der Kette auf dem Reifen mit einem Blick erkennbar ist.

Die Erfindung samt weiterer Vorteile wir im Folgenden anhand einiger nicht einschränkender Ausführungsbeispiele näher erläutert, welche in den Zeichnungen dargestellt sind. In diesen zeigen schematisch:
- Fig. 1: die Außenseite eines Reifens mit einer Gleitschutzkette mit erfindungsgemäßen Felgenschutzabdeckungen;
- Fig. 2: einen Abschnitt eines äußeren Seitenstranges der Gleitschutzkette aus Fig. 1 mit einem in ein Kettenglied des Seitenstranges eingehängten Haken zur Anbindung des Seitenstranges an ein Spurkreuz in einer perspektivischen Ansicht;
- Fig. 3: eine erfindungsgemäße Felgenschutzabdeckung in geöffnetem Zustand in perspek- tivischer Ansicht;
- Fig. 4: den Abschnitt des Seitenstranges der Fig. 2 mit der montierten Felgenschutzabde- ckung aus Fig. 3 in einer perspektivischen Ansicht;
- Fig. 5: die montierte Felgenschutzabdeckung der Fig. 4 in einer Vorderansicht; und
- Fig. 6: die montierte Felgenschutzabdeckung der Fig. 4 mit eingehängten Kettensträngen des Spurkreuzes in einer perspektivischen Ansicht.

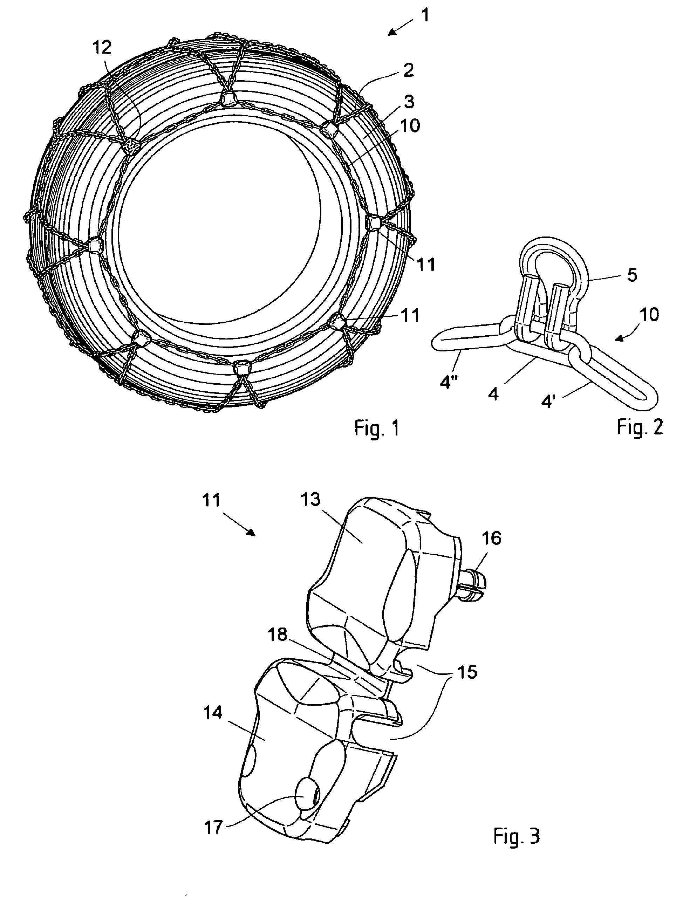

Gemäß Fig. 1 weist eine erfindungsgemäße Gleitschutzkette 1 ein Laufnetz mit Spurkreuzen 2 und einen in einem montierten Zustand an einer Reifenaußenseite 3 anliegenden Seitenstrang 10 auf. Unter Seitenstrang wird hierbei eine Seitenkette verstanden, welche nicht als Spannstrang verwendet wird und bevorzugterweise in sich geschlossen ausgebildet ist.

Die Spurkreuze 2 sind über in je zumindest ein Kettenglied 4 des Seitenstranges 10 eingehängte Haken 5 mit dem Seitenstrang 10 verbunden (Fig. 2). Je Haken 5 kann eine den Haken 5 und das zumindest eine Kettenglied 4 umfassende Felgenschutzabdeckung 11 vorgesehen sein. Um die Montage und Demontage zu erleichtern, kann zumindest eine der Felgenschutzabdeckungen 11 besonders gekennzeichnet sein, beispielsweise durch eine besondere Farbgebung. So ist in der Darstellung gemäß Fig. 1 eine Felgenschutzabdeckung 12 farblich besonders gekennzeichnet (punktiert dargestellt). Durch die Kennzeichnung der Felgenschutzabdeckung 12 kann eine genaue Stellung der Kette am Rad angezeigt werden. Die Kennzeichnung kann beispielsweise dadurch erfolgen, dass die Felgenschutzabdeckung 12 eine andere Farbe als die anderen Felgenschutzabdeckungen 11 aufweist.

Gemäß Fig. 3 weist die Abdeckung 11 einen der Reifenaußenseite abgewandten Vorderteil 13 und einen der Reifenaußenseite zugewandten Hinterteil 14 auf. Vorderteil 13 und Hinterteil 14 weisen Ausnehmungen 15 zur Aufnahme des zumindest einen Kettengliedes 4 und des Hakens 5 auf.

Der Vorderteil 13 und der Hinterteil 14 der Abdeckung 11 können mittels einer Schnappverbindung auf dem Haken 5 und dem zumindest einen Kettenglied 4 fixierbar sein. Hierbei kann mindestens eine der beiden Seiten der Abdeckung 11 zumindest einen Fortsatz 16 und die andere Seite zumindest eine mit dem Fortsatz 16 korrespondierende Öffnung 17 aufweisen, in welche der Fortsatz 16 einschnappbar ist.

Weiters können der Vorder- 13 und der Hinterteil 14 der Felgenschutzabdeckung 11 mittels eines scharnierartigen Gelenks 18 verbunden sein. Darüber hinaus können Vorderteil 13 und Hinterteil 14 sowie das Gelenk 18 einstückig miteinander ausgebildet sein. Bei einer einstückigen Ausbildung der Felgenschutzabdeckung 11 ist es insbesondere aus herstellungstechnischen Gründen von Vorteil, wenn die Abdeckung 11 aus Kunststoff gefertigt ist. Durch die Verwendung von Kunststoff als Material für die Felgenschutzabdeckung 11 lässt sich überdies ein sehr guter Schutz der Felge gegen Beschädigungen bewirken.

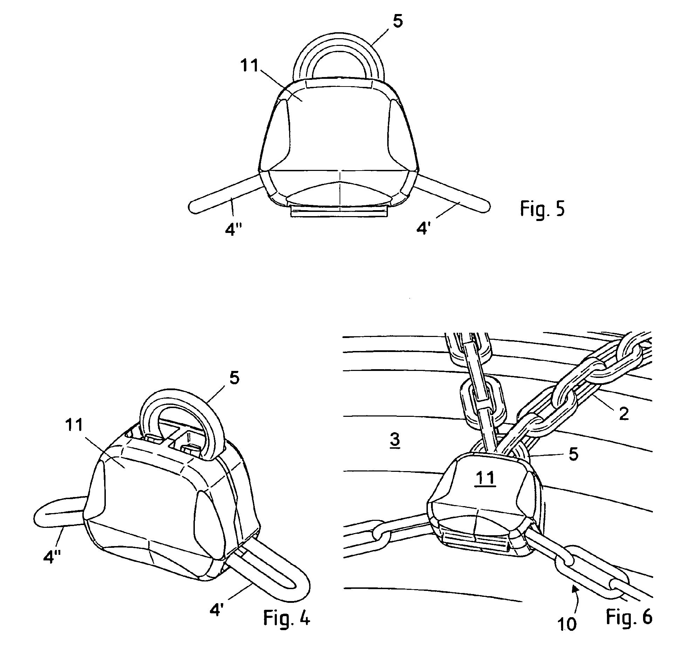

Gemäß den Fig. 4 bis 6 kann die Felgenschutzabdeckung 11 den Haken 5, das (in diesen Zeichnungen nicht sichtbare) Kettenglied 4 des Seitenstranges 10, in welches der Haken eingehängt ist, sowie Abschnitte der diesem Kettenglied 4 links und rechts benachbarten Kettenglieder 4', 4" im Wesentlichen umhüllen.

## Patentansprüche

1. Gleitschutzkette (1) mit einem Laufnetz mit Spurkreuzen (2) und einem in einem montierten Zustand an einer Reifenaußenseite (3) anliegenden Seitenstrang (10), wobei die Spurkreuze (2) über Haken (5) mit dem Seitenstrang verbunden sind, wobei je Haken (5) eine den Haken (5) umfassende Felgenschutzabdeckung (11) vorgesehen ist, **dadurch gekennzeichnet, dass** der Seitenstrang (10) Kettenglieder aufweist und die Haken (5) in je zumindest ein Kettenglied (4) des Seitenstranges (10) eingehängt sind, wobei die Felgenschutzabdeckungen (11) jeweils das zumindest eine Kettenglied (4) des Seitenstrangs umfassen und ein der Anbindung der Spurkreuze (2) dienender Teil des Hakens (5) aus der Felgenschutzabdeckung hinausragt.

2. Gleitschutzkette nach Anspruch 1, **dadurch gekennzeichnet, dass** die Felgenschutzabdeckung (11) einen der Reifenaußenseite abgewandten Vorderteil (13) und einen der Reifenaußenseite zugewandten Hinterteil (14) aufweist, wobei Vorder- (13) und Hinterteil (14) Ausnehmungen (15) zur Aufnahme des zumindest einen Kettengliedes (4) und des Hakens (5) aufweisen.

3. Gleitschutzkette nach Anspruch 2, **dadurch gekennzeichnet, dass** der Vorderteil (13) und der Hinterteil (14) der Felgenschutzabdeckung (11) mittels einer Schnappverbindung auf dem Haken (5) und dem zumindest einen Kettenglied (4) fixierbar sind, wobei zumindest eine der beiden Seiten der Felgenschutzabdeckung (11) zumindest einen Fortsatz (16) und die andere Seite zumindest eine mit dem Fortsatz (16) korrespondierende Öffnung (17) aufweist, in welche der Fortsatz (16) einschnappbar ist.

4. Gleitschutzkette nach Anspruch 2 oder 3, **dadurch gekennzeichnet, dass** der Vorder- (13) und der Hinterteil (14) der Felgenschutzabdeckung (11) mittels eines scharnierartigen Gelenks (18) verbunden sind.

5. Gleitschutzkette nach einem der Ansprüche 1 bis 4, **dadurch gekennzeichnet, dass** die Felgenschutzabdeckung (11) das Kettenglied (4) des Seitenstranges, in welches der Haken (5) eingehängt ist, sowie Abschnitte der diesem Kettenglied (4) links und rechts benachbarten Kettenglieder (4', 4") in einem montierten Zustand im Wesentlichen umhüllt.

6. Gleitschutzkette nach einem der Ansprüche 1 bis 5, **dadurch gekennzeichnet, dass** die Felgenschutzabdeckung (11) aus Kunststoff gefertigt ist.

## Claims

1. Anti-skid chain (1) with a chain mesh with track cross strands (2) and a side strand (10) resting against an outer side of a tire (3) when mounted, the track cross strands (2) being connected with the side strand via hooks (5), wherein for each hook (5) a rim protection cover (11) encompassing the respective hook is provided, **characterised in that** the side strand (10) comprises chain links and the hooks (5) are hooked into at least one chain link (4) of the side strand (10), the rim protection covers (11) surrounding the respective chain links (4) of the side strand, a part of the hook (5) that serves to engage with the track cross strands (2) protruding from the rim protection cover.

2. Anti-skid chain according to claim 1, **characterized in that** the rim protection cover (11) has a front part (13) facing away from the outer tire side and a rear part (14) facing towards the outer tire side, said front and rear parts having recesses adapted to accommodate the at least one chain link (4) and the hook (5).

3. Anti-skid chain according to claim 2, **characterized in that** the front part (13) and the rear part (14) of the rim protection cover (11) can be affixed onto the hook (5) and the at least one chain link (4) using a snap fastening, wherein at least one of the two sides of the rim protection cover (11) has a protrusion (16) and the other side has an opening (17) corresponding to the protrusion, said protrusion (16) being configured to snap into said opening.

4. Anti-skid chain according to claim 2 or 3, **characterized in that** the front and rear parts (13,14) of the rim protection cover (11) are joined by means of a hinge-like joint (18).

5. Anti-skid chain according to any one of claims 1 to 4, **characterized in that** the rim protection cover (11) substantially surrounds the chain link (4) of the side strand into which the hook (5) is hooked, as well as sections of the chain links (4', 4") next to said chain link on the left and the right, when mounted.

6. Anti-skid chain according to any one of the preceding claims, **characterized in that** the rim protection cover (11) is made of plastic.

## Revendications

1. Chaîne antidérapante (1) présentant un maillage avec des croisillons (2) et une ligne latérale (10) reposant dans un état monté sur un côté extérieur de pneu (3), les croisillons (2) étant reliés par des crochets (5) à la ligne latérale, par crochet (5) étant prévu un recouvrement de protection pour jantes (11) comportant le crochet (5), **caractérisée en ce que** la ligne latérale (10) présente des maillons et **en ce que** les crochets (5) sont suspendus chacun dans au moins un maillon (4) de la ligne latérale (10), les recouvrements de protection pour jantes (11) comportant respectivement au moins un maillon (4) de la ligne latérale et une partie du crochet (5) servant à lier les croisillons (2) dépassant du recouvrement de protection pour jantes.

2. Chaîne antidérapante selon la revendication 1, **caractérisée en ce que** le recouvrement de protection pour jantes (11) présente une partie avant (13) éloignée du côté extérieur de pneu et une partie arrière (14) tournée vers le côté extérieur de pneu, la partie avant (13) et la partie arrière (14) présentant des évidements (15) pour la réception d'au moins un maillon (4) et du crochet (5).

3. Chaîne antidérapante selon la revendication 2, **caractérisée en ce que** la partie avant (13) et la partie arrière (14) du recouvrement de protection pour jantes (11) peuvent être fixées à l'aide d'un assemblage à encliquetage sur le crochet (5) et sur au moins un maillon (4), au moins l'un des deux côtés du recouvrement de protection pour jantes (11) présentant au moins un prolongement (16) et l'autre côté au moins une ouverture (17) correspondant au prolongement (16), dans laquelle ce dernier peut être encliqueté.

4. Chaîne antidérapante selon la revendication 2 ou 3, **caractérisée en ce que** la partie avant (13) et la partie arrière (14) du recouvrement de protection pour jantes (11) sont reliées à l'aide d'une articulation de type charnière (18).

5. Chaîne antidérapante selon l'une quelconque des revendications 1 à 4, **caractérisée en ce que** le recouvrement de protection pour jantes (11) enveloppe essentiellement le maillon (4) de la ligne latérale, dans lequel le crochet (5) est suspendu, ainsi que des sections des maillons (4', 4") contigus à gauche et à droite à ce maillon (4) dans un état monté.

6. Chaîne antidérapante selon l'une quelconque des revendications 1 à 5, **caractérisée en ce que** le recouvrement de protection pour jantes (11) est fabriqué en plastique.
